(19) Europäisches Patentamt
European Patent Office
Office européen des brevets

(11) **EP 4 562 370 B1**

(12) # EUROPÄISCHE PATENTSCHRIFT

(45) Veröffentlichungstag und Bekanntmachung des Hinweises auf die Patenterteilung:
**18.02.2026 Patentblatt 2026/08**

(21) Anmeldenummer: **23735725.6**

(22) Anmeldetag: **27.06.2023**

(51) Internationale Patentklassifikation (IPC):
***G01C 21/20*** *(2006.01)* ***B60W 60/00*** *(2020.01)*
***G06N 3/0464*** *(2023.01)* ***G06N 3/08*** *(2023.01)*

(52) Gemeinsame Patentklassifikation (CPC):
**G01C 21/20; B60W 60/0027; G06N 3/0464; G06N 3/08;** B60W 2556/40

(86) Internationale Anmeldenummer:
**PCT/EP2023/067482**

(87) Internationale Veröffentlichungsnummer:
**WO 2024/022704 (01.02.2024 Gazette 2024/05)**

(54) **VERFAHREN ZUR PRÄDIKTION EINER BEWEGUNG EINES VERKEHRSTEILNEHMERS**
METHOD FOR PREDICTING A MOVEMENT OF A ROAD USER
PROCÉDÉ DE PRÉDICTION D’UN MOUVEMENT D’UN USAGER DE LA ROUTE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **29.07.2022 DE 102022002769**

(43) Veröffentlichungstag der Anmeldung:
**04.06.2025 Patentblatt 2025/23**

(73) Patentinhaber: **Mercedes-Benz Group AG**
**70372 Stuttgart (DE)**

(72) Erfinder:
- **SCHMIDT, Julian**
  **78256 Steißlingen (DE)**
- **RUPPRECHT, Jan**
  **71083 Herrenberg (DE)**
- **GRITSCHNEDER, Franz**
  **73728 Esslingen (DE)**
- **JORDAN, Julian**
  **72074 Tübingen (DE)**

(74) Vertreter: **Novagraaf Group**
**Chemin de l’Echo 3**
**1213 Onex / Geneva (CH)**

(56) Entgegenhaltungen:
**US-A1- 2021 347 377** **US-A1- 2022 144 309**

- **HENGGANG CUI ET AL: "Multimodal Trajectory Predictions for Autonomous Driving using Deep Convolutional Networks", ARXIV.ORG, CORNELL UNIVERSITY LIBRARY, 201 OLIN LIBRARY CORNELL UNIVERSITY ITHACA, NY 14853, 18 September 2018 (2018-09-18), XP081088040**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 4 562 370 B1

## Beschreibung

Die Erfindung betrifft ein Verfahren zur Prädiktion einer Bewegung eines Verkehrsteilnehmers in einer Fahrzeugumgebung gemäß dem Oberbegriff des Anspruchs 1.

Die Erfindung betrifft weiterhin eine Verwendung einer in einem solchen Verfahren prädizierten Bewegung eines Verkehrsteilnehmers.

Eine zuverlässige Prädiktion eines Verhaltens von Verkehrsteilnehmern in einer Fahrzeugumgebung ist essenziell für einen automatisierten, insbesondere hochautomatisierten oder autonomen Fahrbetrieb von Fahrzeugen. Nur wenn ein automatisiertes Fahrzeugsystem in der Lage ist, das Verhalten umliegender Verkehrsteilnehmer zuverlässig vorherzusagen, kann ein zukünftiges Verhalten des automatisierten Fahrzeugs sicher geplant werden.

Für eine solche Prädiktion sind aus dem Stand der Technik verschiedene Ansätze bekannt. Diese Ansätze umfassen unter anderem rasterkartenbasierte Ansätze, bei welchen die Fahrzeugumgebung oder Teile der Fahrzeugumgebung, beispielsweise eine Straßengeometrie und eine Bewegungshistorie umliegender Verkehrsteilnehmer, auch als Agenten bezeichnet, in einer Rasterkarte abgebildet sind. Die Rasterkarte zeigt dabei die Fahrzeugumgebung aus einer Vogelperspektive. Ein zu prädizierender Verkehrsteilnehmer befindet sich beispielsweise im Zentrum der Rasterkarte. Im Anschluss werden künstliche neuronale Netzwerke, beispielsweise so genannte Convolutional Neural Networks, kurz CNN, dazu verwendet, um Informationen der Rasterkarte zu verarbeiten und hieraus eine zukünftige Trajektorie des zu prädizierenden Verkehrsteilnehmers zu schätzen.

Ein solches Verfahren zur Prädiktion einer Bewegung eines Verkehrsteilnehmers ist aus "Henggang Cui et al.: Multimodal Trajectory Predictions for Autonomous Driving using Deep Convolutional Networks; In: arXiv:1809.10732v2 [cs.RO] 1 Mar 2019" bekannt. Hierbei werden mehrere mögliche Trajektorien von Verkehrsteilnehmern in einer Umgebung eines Fahrzeugs oder Roboters vorhergesagt und deren Wahrscheinlichkeiten abgeschätzt. Weiterhin wird ein Umgebungskontext jedes Verkehrsteilnehmers in ein Rasterbild kodiert, welches von tiefen künstlichen neuronalen Netzwerken verwendet wird, um automatisch eine Trajektorie für den Verkehrsteilnehmer abzuleiten. Die Rasterkarte weist dabei eine vorgegebene Anzahl von Rasterzellen und drei Schichten, entsprechend einem RGB-Bild, auf. Die Schichten beinhalten sowohl eine statische Infrastruktur, beispielsweise Straßen, als auch dynamische Informationen, beispielsweise eine historische Bewegung eines zu prädizierenden Verkehrsteilnehmers und umliegender Verkehrsteilnehmer.

Die Offenlegungsschrift US 2022/144309 A1 betrifft ein System und ein Verfahren zur Bestimmung einer Navigationstrajektorie unter Verwendung von bestärkendem Lernen für ein Ego-Fahrzeug in einem Navigationsnetzwerk. Ein hypothetischer Standort von Fahrzeugen wird als Wert in einem festen und auf den Standort und Fahrtrichtung des Egofahrzeugs ausgerichtetem Raster dargestellt.

Die US 2021/347377 A1 offenbart Techniken zur Vorhersage des Objektverhaltens in einer Umgebung eines Verkehrsteilnehmers, wobei diese Eingaben von Daten in und das Empfangen einer Ausgabe vom Modell umfassen, die eine diskretisierte Darstellung darstellt. Die diskretisierte Darstellung kann mit einer Wahrscheinlichkeit verknüpft sein, dass ein Objekt zu einem zukünftigen Zeitpunkt einen Ort in der Umgebung erreicht. Die Umgebung des Verkehrsteilnehmers wird in Form eine Rasterkarte repräsentiert, die dem Modell ais Eingabe zugeführt wird.

Der Erfindung liegt die Aufgabe zu Grunde, ein neuartiges Verfahren zur Prädiktion einer Bewegung eines Verkehrsteilnehmers und eine Verwendung einer in einem solchen Verfahren prädizierten Bewegung eines Verkehrsteilnehmers anzugeben.

Die Aufgabe wird erfindungsgemäß gelöst durch ein Verfahren, welches die im Anspruch 1 angegebenen Merkmale aufweist, und durch eine Verwendung, welche die im Anspruch 6 angegebenen Merkmale aufweist.

Vorteilhafte Ausgestaltungen der Erfindung sind Gegenstand der Unteransprüche.

In einem Verfahren zur Prädiktion einer Bewegung eines Verkehrsteilnehmers in einer Fahrzeugumgebung wird eine Umgebung des Verkehrsteilnehmers in Form einer Rasterkarte mit einer vorgegebenen Anzahl von Rasterzellen dargestellt, wobei die Rasterkarte einem künstlichen neuronalen Netzwerk als Eingangsinformation zugeführt wird und mittels des neuronalen Netzwerks aus der Eingangsinformation eine Trajektorie des Verkehrsteilnehmers prädiziert wird.

Erfindungsgemäß wird zu einer Skalierung eines Darstellungsbereichs der Rasterkarte ein Maßstab der Rasterzellen in Abhängigkeit einer Geschwindigkeit des Verkehrsteilnehmers dynamisch skaliert. Mittels der Rasterkarte wird bei einer hohen Geschwindigkeit des Verkehrsteilnehmers ein größerer Bereich der Umgebung des Verkehrsteilnehmers als bei einer geringen Geschwindigkeit dargestellt.

Mittels des vorliegenden Verfahrens und der dynamischen Skalierung des Darstellungsbereichs, auch als Sichtbereich bezeichnet, wird in besonders vorteilhafter Weise bei rasterkartenbasierten Ansätzen vermieden, dass bei einer gegebenen Auflösung einer Rasterkarte, beispielsweise 256 Pixel x 256 Pixel, noch vor einem Trainingsvorgang des künstlichen neuronalen Netzwerks definiert werden muss, welchen Darstellungsbereich diese Rasterkarte in der realen Welt, beispielsweise 50 Meter x 50 Meter, abdeckt. Somit muss auch ein Darstellungsbereich, welcher durch eine einzelne Rasterzelle der Rasterkarte abgedeckt wird, nicht fix vorgegeben werden.

Hierdurch kann eine Definition eines definierten und gleichbleibenden Darstellungsbereichs entfallen und es ist auch keine Kompromissfindung, welche bei einer festen Wahl des Darstellungsbereichs der Rasterkarte auftritt, erforderlich. Dies resultiert aus dem Umstand, dass mittels des vorliegenden Verfahrens aufgrund der dynamischen Vorgabe des Darstellungsbereichs für hohe Geschwindigkeiten des zu prädizierenden Verkehrsteilnehmers, beispielsweise eines Fahrzeugs auf einer Autobahn, ein möglichst großer Darstellungsbereich abgedeckt wird, damit auch Straßengeometrien und umliegende Verkehrsteilnehmer für die Prädiktion miteinbezogen werden, die weit vom zu prädizierenden Verkehrsteilnehmer entfernt sind. Das Verfahren ermöglicht aufgrund der dynamischen Vorgabe des Darstellungsbereichs auch bei niedrigen Geschwindigkeiten eines zu prädizierenden Verkehrsteilnehmers, beispielsweise eines Fahrzeugs im Stadtverkehr, die Wahl eines niedrigeren Darstellungsbereichs, um alle nahen umliegenden Informationen möglichst detailliert erfassen zu können.

In besonders vorteilhafter Weise können bestehende Prädiktionsansätze zur Realisierung des Verfahrens entsprechend erweitert werden.

Mittels des vorliegenden Verfahrens ist es also möglich, den Hauptschwachpunkt von rasterkartenbasierten Prädiktionsansätzen, nämlich die fixe Vorgabe des Darstellungsbereichs der Rasterkarte und die daraus resultierenden Probleme, zu eliminieren. Dabei ermöglicht das Verfahren, dass der Darstellungsbereich nicht mehr eingeschränkt ist und kein Kompromiss für Bewegungen mit niedrigen und hohen Geschwindigkeiten gefunden werden muss. Ein weiterer Vorteil ist, dass für hohe Geschwindigkeiten eines Verkehrsteilnehmers nicht automatisch auch höhere Auflösungen der Rasterkarte benötigt werden.

In einer möglichen Ausgestaltung des Verfahrens wird der Darstellungsbereich gemäß

$$B = L = \max\left(50, 2\frac{v^2}{(2a)}\right) Meter$$

mit B = Breite des Darstellungsbereichs,
L = Länge des Darstellungsbereichs,
v = Geschwindigkeit des Verkehrsteilnehmers und
a = Beschleunigung des Verkehrsteilnehmers

ermittelt. Dabei skaliert die Größe des Darstellungsbereichs nichtlinear mit einem Bremsweg, also $\frac{v^2}{(2a)}$ des zu prädizierenden Verkehrsteilnehmers. Typische Werte für die Beschleunigung des Verkehrsteilnehmers sind für Fahrzeuge beispielsweise 3 $m/s^2$ bis 5 $m/s^2$. Durch den "max"-Operator wird eine Untergrenze von 50 Meter definiert.

In einer weiteren möglichen Ausgestaltung des Verfahrens wird die Eingangsinformation in Abhängigkeit des skalierten Darstellungsbereichs skaliert. Dies ermöglicht, dass das Verfahren durch Erweiterung bereits bestehender Prädiktionsansätze realisiert werden kann.

In einer weiteren möglichen Ausgestaltung des Verfahrens wird dem neuronalen Netzwerk und/oder einem Netz zur Weiterverarbeitung mittels des Netzwerks ermittelter Ergebnisse ein Skalierungsfaktor des Maßstabs der Rasterzellen zugeführt. Dies ermöglicht eine Umrechnung der aus den gegebenenfalls skalierten Eingangsinformationen ermittelten Ergebnisse und somit ebenfalls, dass das Verfahren durch Erweiterung bereits bestehender Prädiktionsansätze realisiert werden kann.

In einer weiteren möglichen Ausgestaltung des Verfahrens wird nach der Prädiktion der Trajektorie der Darstellungsbereich auf einen vorgegebenen Wert rückskaliert, so dass dieser sich beispielsweise wieder in einem Ausgangszustand befindet.

Die erfindungsgemäße Verwendung einer in einem Verfahren nach einem der vorhergehenden Ansprüche prädizierten Bewegung eines Verkehrsteilnehmers in einer Fahrzeugumgebung zum Betrieb einer automatisierten Fahrzeugfunktion ermöglicht aufgrund der vorteilhaften Prädiktion der Verkehrsteilnehmer in der Fahrzeugumgebung einen besonders exakten und zuverlässigen Betrieb der automatisierten Fahrzeugfunktion, beispielsweise einer automatisierten Längs- und/oder Querregelung des Fahrzeugs.

Ausführungsbeispiele der Erfindung werden im Folgenden anhand von Zeichnungen näher erläutert.

Dabei zeigen:

Fig. 1 schematisch eine Draufsicht einer Verkehrssituation mit mehreren Verkehrsteilnehmern,

Fig. 2 schematisch eine Draufsicht einer weiteren Verkehrssituation mit mehreren Verkehrsteilnehmern und einen Darstellungsbereich einer Rasterkarte,

Fig. 3 schematisch eine Draufsicht einer weiteren Verkehrssituation mit mehreren Verkehrsteilnehmern und einen Darstellungsbereich einer Rasterkarte,

Fig. 4 schematisch ein Blockschaltbild einer Vorrichtung zur Prädiktion einer Bewegung eines Verkehrsteilnehmers in einer Fahrzeugumgebung nach dem Stand der Technik und

Fig. 5 schematisch ein Blockschaltbild einer Vorrichtung zur Prädiktion einer Bewegung eines Verkehrsteilnehmers in einer Fahrzeugumgebung.

Einander entsprechende Teile sind in allen Figuren mit den gleichen Bezugszeichen versehen.

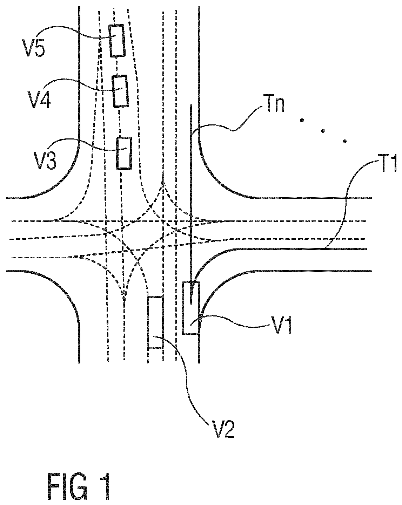

In Figur 1 ist eine Draufsicht einer Verkehrssituation mit mehreren Verkehrsteilnehmern V1 bis V5, beispielsweise Kraftfahrzeugen, dargestellt.

Für einen automatisierten, insbesondere hochautomatisierten oder autonomen, Fahrbetrieb eines nicht näher dargestellten Fahrzeugs ist es erforderlich, ein zukünftiges Verhalten und somit zukünftige Bewegungen von in einer Umgebung des Fahrzeugs vorhanden Verkehrsteilnehmern V1 bis V5 zu prädizieren. Mögliche Bewegungen des Verkehrsteilnehmers V1 sind dabei durch verschiedene mögliche Trajektorien T1 bis Tn dargestellt.

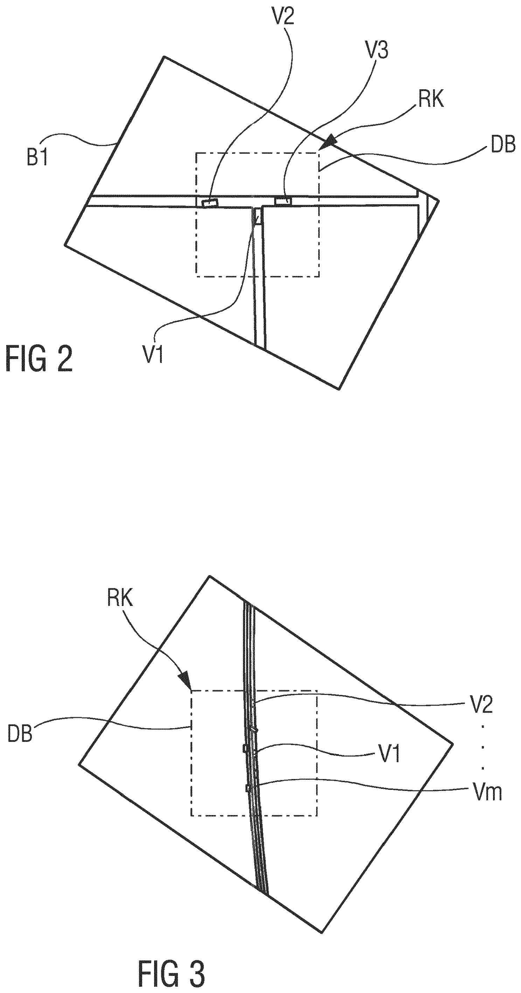

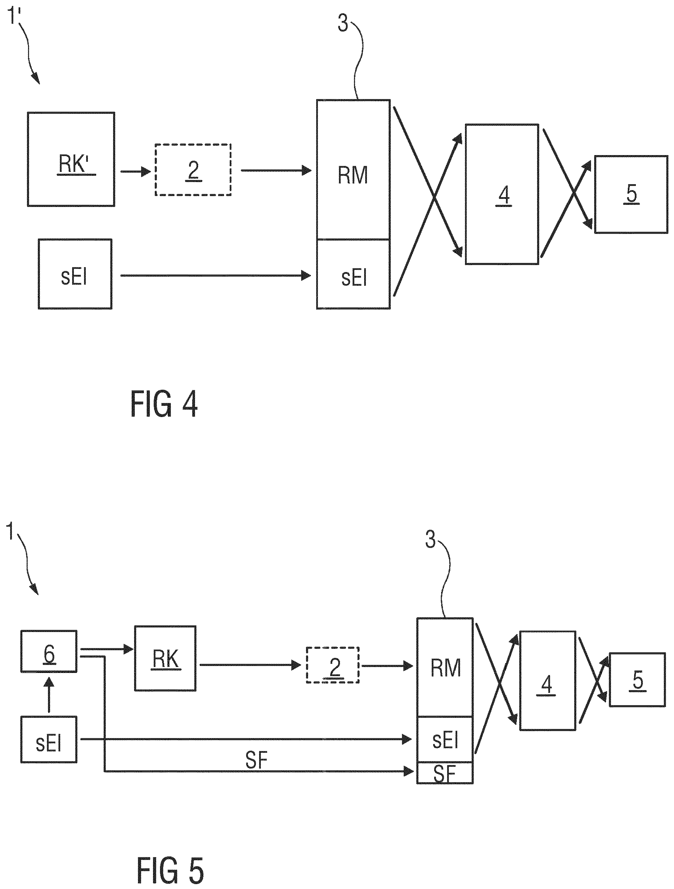

Zu einer solchen Prädiktion werden beispielsweise rasterkartenbasierte Ansätze verwendet. Hierbei wird die Umgebung oder es werden Teile der Umgebung, beispielsweise eine Straßengeometrie und eine Bewegungshistorie umliegender Verkehrsteilnehmer V1 bis V5, auch als Agenten bezeichnet, in einer in den Figuren 2, 3 und 5 näher dargestellten Rasterkarte RK aus der Vogelperspektive darstellt. Der zu prädizierende Verkehrsteilnehmer V1 bis V5, welcher beispielsweise ein Fahrzeug, Fußgänger, Radfahrer oder anderer Verkehrsteilnehmer V1 bis V5 ist, befindet sich beispielsweise im Zentrum der Rasterkarte RK. Im Anschluss werden in den Figuren 4 und 5 näher dargestellte künstliche neuronale Netzwerke 2, beispielsweise so genannte Convolutional Neural Networks, kurz CNN, dazu verwendet, um die Informationen der Rasterkarte RK zu verarbeiten und hieraus eine zukünftige Trajektorie T1 bis Tn des zu prädizierenden Verkehrsteilnehmers V1 bis V5 zu schätzen.

Figur 2 zeigt eine Draufsicht einer weiteren Verkehrssituation mit mehreren Verkehrsteilnehmern V1 bis V3 und einen Darstellungsbereich DB einer Rasterkarte RK. Die Verkehrsteilnehmer V1 bis V3 sind insbesondere Fahrzeuge.

Um bei der beschriebenen Prädiktion der Bewegung des entsprechenden Verkehrsteilnehmers V1 bis V3 mittels eines rasterkartenbasierten Ansatzes Kompromisse bei einer Wahl des Darstellungsbereichs DB der Rasterkarte RK zu eliminieren, ist vorgesehen, den Darstellungsbereich DB dynamisch zu skalieren. Hierdurch entfällt eine Definition eines gleichbleibenden Darstellungsbereichs DB, so dass keine Kompromissfindung für verschiedene Verkehrsszenarien, beispielsweise in einer Autobahnumgebung oder einer städtischen Umgebung, erforderlich ist.

Diese Skalierung erfolgt, indem ein Maßstab von Rasterzellen der Rasterkarte RK dynamisch in Abhängigkeit einer Geschwindigkeit des zu prädizierenden Verkehrsteilnehmers V1 bis V3 skaliert wird.

Eine Auflösung der Rasterkarte RK, beispielsweise 256 Pixel x 256 Pixel, bleibt dabei insbesondere weiterhin fixiert. Allerdings wird während des Betriebs dynamisch bestimmt, welcher Darstellungsbereich DB von der Rasterkarte RK abgedeckt wird. Diese dynamische Bestimmung wird in Abhängigkeit von der Momentangeschwindigkeit des zu prädizierenden Verkehrsteilnehmers V1 bis V3 durchgeführt.

Für höhere Geschwindigkeiten des entsprechenden Verkehrsteilnehmers V1 bis V3 wird ein größerer Darstellungsbereich DB abgedeckt, als für niedrigere Geschwindigkeiten. Somit verändert sich auch ein Darstellungsbereich DB, welcher durch eine einzelne Rasterzelle abgedeckt wird.

Eine mögliche Gleichung zur Bestimmung von Abmessungen des Darstellungsbereichs DB ist

$$B = L = \max\left(50, 2\frac{v^2}{(2a)}\right) Meter, \qquad (1)$$

mit B = Breite des Darstellungsbereichs DB,
L = Länge des Darstellungsbereichs DB,
v = Geschwindigkeit des zu prädizierenden Verkehrsteilnehmers V1 bis V3 und
a = Beschleunigung des zu prädizierenden Verkehrsteilnehmers V1 bis V3.

Dabei skaliert eine Größe des Darstellungsbereichs DB nichtlinear mit einem Bremsweg, also $\frac{v^2}{(2a)}$ des zu prädizierenden Verkehrsteilnehmers V1 bis V3. Typische Werte für die Beschleunigung a des Verkehrsteilnehmers V1 bis V3 sind für Fahrzeuge beispielsweise 3 $m/s^2$ bis 5 $m/s^2$. Durch den "max"-Operator wird eine Untergrenze von 50 Meter definiert.

Im dargestellten Ausführungsbeispiel gemäß Figur 2 befinden sich die Verkehrsteilnehmer V1 bis V3 in einer städtischen Umgebung, wobei der Verkehrsteilnehmer V1 das zu prädizierende Fahrzeug ist und die Verkehrsteilnehmer V2, V3 in der Umgebung des Verkehrsteilnehmers V1 befindliche Fahrzeuge sind. Ein die Verkehrssituation darstellendes Bild B1 ist dabei derart rotiert, dass eine Bewegungsrichtung des zu prädizierenden Verkehrsteilnehmers V1 nach oben gerichtet ist.

Aufgrund der städtischen Umgebung und den damit verbundenen relativ geringen Geschwindigkeiten der Verkehrsteilnehmer V1 bis V3, insbesondere des zu prädizierenden Verkehrsteilnehmers V1, ist der Darstellungsbereich DB der Rasterkarte RK relativ klein gewählt.

In Figur 3 sind eine Draufsicht einer weiteren Verkehrssituation mit mehreren Verkehrsteilnehmern V1 bis Vm und ein Darstellungsbereich DB einer Rasterkarte RK dargestellt, wobei sich die Verkehrsteilnehmer V1 bis Vm auf einer Autobahn befinden. Dabei ist der Verkehrsteilnehmer V1 das zu prädizierende Fahrzeug und die Verkehrsteilnehmer V2 bis Vm in der Umgebung des Verkehrsteilnehmers V1 befindliche Fahrzeuge. Ein die Verkehrssituation darstellendes Bild B2 ist dabei derart rotiert, dass eine Bewegungsrichtung des zu prädizierenden Verkehrsteilnehmers V1 nach oben gerichtet ist.

Im Unterschied zu dem in Figur 2 dargestellten Ausführungsbeispiel ist aufgrund der höheren Geschwindigkeiten der Verkehrsteilnehmer V1 bis Vm auf der Autobahn der Darstellungsbereich DB der Rasterkarte RK größer gewählt.

Figur 4 zeigt ein Blockschaltbild einer Vorrichtung 1' zur Prädiktion einer Bewegung eines Verkehrsteilnehmers V1 bis Vm in einer Fahrzeugumgebung gemäß einem rasterkartenbasierten Ansatz nach dem Stand der Technik.

Die Vorrichtung 1' umfasst ein künstliches neuronales Netzwerk 2, beispielsweise ein Convolutional Neural Network, welchem als Eingangsinformation Daten einer definierten, in ihrer Größe fest vorgegebenen Rasterkarte RK' zugeführt werden.

Das Netzwerk 2 bildet aus den Eingangsinformationen Rastermerkmale RM und überträgt diese an ein Netz 3, welche die Rastermerkmale RM mit Zustandsinformationen sEl, welche beispielsweise eine Geschwindigkeit, eine Position, einen Winkel usw. betreffen, verknüpft und als Ergebnis Trajektorien T1 bis Tn von Verkehrsteilnehmern V1 bis Vm prädiziert.

Die Ergebnisse werden in einem Speicher 4 hinterlegt und mittels einer Ausgabeeinheit 5 ausgegeben.

In Figur 5 ist ein Blockschaltbild einer Vorrichtung 1 zur Prädiktion einer Bewegung eines Verkehrsteilnehmers V1 bis Vm in einer Fahrzeugumgebung gezeigt.

Die Vorrichtung 1 umfasst zusätzlich zu der in Figur 4 dargestellten Vorrichtung 1' ein Skalierungsmodul 6 zur Ermittlung eines Skalierungsfaktors SF zur in den Figuren 2 und 3 beschriebenen Skalierung der Rasterkarte RK.

Hierbei wird zunächst aus den Zustandsinformationen sEl eine Geschwindigkeit des zu prädizierenden Verkehrsteilnehmers V1 bis Vm ermittelt.

Anschließend wird mittels des Skalierungsmoduls 6 der Skalierungsfaktor SF für die Skalierung des Darstellungsbereichs DB der Rasterkarte RK ermittelt und anschließend die Rasterkarte RK entsprechend skaliert. Die Daten der so skalierten Rasterkarte RK werden dann dem Netz 3 zugeführt.

Weiterhin werden die Zustandsinformationen sEl abhängig vom ermittelten Darstellungsbereich DB skaliert und dem Netz 3 wird als zusätzliche Eingangsinformation der Skalierungsfaktor SF zugeführt. Anschließend wird die entsprechende Trajektorie T1 bis Tn prädiziert und nach dieser Prädiktion der Darstellungsbereich DB auf einen vorgegebenen Wert rückskaliert.

## Patentansprüche

1. Verfahren zur Prädiktion einer Bewegung eines Verkehrsteilnehmers (V1 bis Vm) in einer Fahrzeugumgebung, wobei

   - eine Umgebung des Verkehrsteilnehmers (V1 bis Vm) in Form einer Rasterkarte (RK) mit einer vorgegebenen Anzahl von Rasterzellen dargestellt wird,
   - die Rasterkarte (RK) einem künstlichen neuronalen Netzwerk (2) als Eingangsinformation zugeführt wird und
   - mittels des neuronalen Netzwerks (2) aus der Eingangsinformation eine Trajektorie (T1 bis Tn) des Verkehrsteilnehmers (V1 bis Vm) prädiziert wird,

   **dadurch gekennzeichnet, dass**

   - zu einer Skalierung eines Darstellungsbereichs (DB) der Rasterkarte (RK) ein Maßstab der Rasterzellen in Abhängigkeit einer Geschwindigkeit des Verkehrsteilnehmers (V1 bis Vm) dynamisch skaliert wird,
   - wobei mittels der Rasterkarte (RK) bei einer hohen Geschwindigkeit des Verkehrsteilnehmers (V1 bis Vm) ein größerer Bereich der Umgebung des Verkehrsteilnehmers (V1 bis Vm) als bei einer geringen Geschwindigkeit dargestellt wird.

2. Verfahren nach Anspruch 1,
   **dadurch gekennzeichnet, dass** der Darstellungsbereich (DB) gemäß

$$B = L = \max\left(50, 2\frac{v^2}{(2a)}\right) Meter$$

mit B = Breite des Darstellungsbereichs (DB),
L = Länge des Darstellungsbereichs (DB),
v = Geschwindigkeit des Verkehrsteilnehmers (V1 bis Vm) und
a = Beschleunigung des Verkehrsteilnehmers (V1 bis Vm) ermittelt wird.

**3.** Verfahren nach Anspruch 1 oder 2,
**dadurch gekennzeichnet, dass** die Eingangsinformation in Abhängigkeit des skalierten Darstellungsbereichs (DB) skaliert wird.

**4.** Verfahren nach einem der vorhergehenden Ansprüche,
**dadurch gekennzeichnet, dass** dem neuronalen Netzwerk (2) und/oder einem Netz zur Weiterverarbeitung mittels des Netzwerks (2) ermittelter Ergebnisse ein Skalierungsfaktor (SF) des Maßstabs der Rasterzellen zugeführt wird.

**5.** Verfahren nach einem der vorhergehenden Ansprüche,
**dadurch gekennzeichnet, dass** nach der Prädiktion der Trajektorie (T1 bis Tn) der Darstellungsbereich (DB) auf einen vorgegebenen Wert rückskaliert wird.

**6.** Verfahren nach einem der vorhergehenden Ansprüche, **dadurch gekennzeichnet, dass** die prädizierte Bewegung eines Verkehrsteilnehmers in einer Fahrzeugumgebung zum Betrieb einer automatisierten Fahrzeugfunktion verwendet wird.

**Claims**

**1.** Method for predicting the movement of a road user (V1 to Vm) in a vehicle environment,

- the environment of the road user (V1 to Vm) being displayed in the form of a grid map (RK) containing a predefined number of grid cells,
- the grid map (RK) being supplied to an artificial neural network (2) as input information and
- a trajectory (T1 to Tn) of the road user (V1 to Vm) being predicted from the input information by means of the neural network (2),

**characterized in that**

- a scale of the grid cells is dynamically scaled on the basis of a speed of the road user (V1 to Vm) in order to scale a display region (DB) of the grid map (RK),
- a larger region of the environment of the road user (V1 to Vm) being displayed by means of the grid map (RK) in the case of a high speed of the road user (V1 to Vm) than in the case of a low speed.

**2.** Method according to claim 1,
**characterized in that** the display region (DB) is determined in accordance with

$$W = L = \max\left(50, 2\frac{v^2}{(2a)}\right) meters$$

where W = width of the display region (DB),
L = length of the display region (DB),
v = speed of the road user (V1 to Vm) and
a = acceleration of the road user (V1 to Vm).

**3.** Method according to claim 1 or claim 2,
**characterized in that** the input information is scaled on the basis of the scaled display region (DB).

**4.** Method according to any of the preceding claims,

**characterized in that** a scaling factor (SF) of the scale of the grid cells is supplied to the neural network (2) and/or to a network for further processing results determined by means of the network (2).

**5.** Method according to any of the preceding claims,
**characterized in that** after the prediction of the trajectory (T1 to Tn), the display region (DB) is scaled back to a predefined value.

**6.** Method according to any of the preceding claims, **characterized in that** the predicted movement of a road user in a vehicle environment is used to operate an automated vehicle function.

**Revendications**

**1.** Procédé pour la prédiction d'un mouvement d'un usager de la route (V1 à Vm) dans un environnement de véhicule, dans lequel

- un environnement de l'usager de la route (V1 à Vm) est représenté sous la forme d'une carte raster (RK) comportant un nombre prédéfini de cellules raster,
- la carte raster (RK) est transmise à un réseau neuronal (2) artificiel en tant qu'informations d'entrée et
- une trajectoire (T1 à Tn) de l'usager de la route (V1 à Vm) est prédite au moyen du réseau neuronal (2) à partir des informations d'entrée,

**caractérisé en ce que**

- pour une mise à l'échelle d'une zone de représentation (DB) de la carte raster (RK), une échelle des cellules raster est mise à l'échelle de manière dynamique en fonction d'une vitesse de l'usager de la route (V1 à Vm),
- dans lequel, lorsque la vitesse de l'usager de la route (V1 à Vm) est élevée, une zone plus grande de l'environnement de l'usager de la route (V1 à Vm) est représentée au moyen de la carte raster (RK) par rapport à lorsque la vitesse est faible.

**2.** Procédé selon la revendication 1,
**caractérisé en ce que** la zone de représentation (DB) est déterminée conformément à

$$B = L = \max\left(50, 2\frac{v^2}{(2a)}\right) \textit{mètres}$$

avec B = largeur de la zone de représentation (DB),
L = longueur de la zone de représentation (DB),
v = vitesse de l'usager de la route (V1 à Vm) et
a = accélération de l'usager de la route (V1 à Vm).

**3.** Procédé selon la revendication 1 ou 2,
**caractérisé en ce que** les informations d'entrée sont mises à l'échelle en fonction de la zone de représentation (DB) mise à l'échelle.

**4.** Procédé selon l'une des revendications précédentes,
**caractérisé en ce qu'**un facteur de mise à l'échelle (SF) de l'échelle des cellules raster est transmis au réseau neuronal (2) et/ou à un réseau pour le traitement ultérieur de résultats déterminés au moyen du réseau (2).

**5.** Procédé selon l'une des revendications précédentes,
**caractérisé en ce qu'**après la prédiction de la trajectoire (T1 à Tn), la zone de représentation (DB) est remise à l'échelle à une valeur prédéfinie.

**6.** Procédé selon l'une des revendications précédentes, **caractérisé en ce que** le mouvement prédit d'un usager de la route dans un environnement de véhicule est utilisé pour faire fonctionner une fonction de véhicule automatisée.

V5
V4
V3
Tn
T1
V1
V2

FIG 1

V2
V3
RK
DB
B1
V1

FIG 2

RK
DB
V2
V1
Vm

FIG 3

1'
3
RK'
2
RM
4
5
sEI
sEI

FIG 4

1
3
6
RK
2
RM
4
5
sEI
sEI
SF
SF

FIG 5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 2022144309 A1
- US 2021347377 A1

### In der Beschreibung aufgeführte Nicht-Patentliteratur

- **HENGGANG CUI et al.** Multimodal Trajectory Predictions for Autonomous Driving using Deep Convolutional Networks. *In: arXiv:1809.10732v2 [cs.RO*, 01 March 2019